# EUROPÄISCHE PATENTSCHRIFT

(11) **EP 4 146 507 B1**
(45) Veröffentlichungstag und Bekanntmachung des Hinweises auf die Patenterteilung: **08.01.2025**
(21) Anmeldenummer: 21726549.5
(22) Anmeldetag: 06.05.2021
(51) Int. Cl.: B60R 21/2165, G01B 11/06

(54) **VERFAHREN ZUR PRÜFUNG EINER AIRBAG-ABDECKUNG MIT EINER SOLLBRUCHLINIE MIT DEFINIERTEM AUFREISSWIDERSTAND**
METHOD FOR TESTING AN AIRBAG COVER COMPRISING A PREDETERMINED BREAKING LINE HAVING A DEFINED TEAR RESISTANCE
PROCÉDÉ DE TEST D'UNE COUVERTURE DE COUSSIN GONFLABLE DE SÉCURITÉ COMPORTANT UNE LIGNE DE RUPTURE PRÉDÉTERMINÉE PRÉSENTANT UNE RÉSISTANCE DÉFINIE À LA DÉCHIRURE

(30) Priorität: 08.05.2020 DE 102020112495
(43) Veröffentlichungstag der Anmeldung: 15.03.2023
(73) Patentinhaber: JENOPTIK Automatisierungstechnik GmbH, 07745 Jena (DE)
(72) Erfinder: WITTENBECHER, Wolfgang, 07768 Gumperda (DE)
(74) Vertreter: Gleim Petri Patent- und Rechtsanwaltspartnerschaft mbB
(86) Internationale Anmeldenummer: PCT/DE2021/100412
(87) Internationale Veröffentlichungsnummer: WO 2021/223812

(56) Entgegenhaltungen:
- JP-A- 2005 017 130
- US-A1- 2002 152 813

## Beschreibung

Die Erfindung betrifft ein Verfahren zur zerstörungsfreien Prüfung einer Airbag-Abdeckung, nämlich der Prüfung ob eine in der Airbag-Abdeckung eingebrachte Sollbruchlinie einen vorgegebenen Aufreißwiderstand aufweist. Es ist insbesondere dann vorteilhaft anwendbar ist, wenn die Airbag-Abdeckung aus einem nichttransparentem Material besteht.

Damit sich ein hinter einer Airbag-Abdeckung angeordneter Airbag im Bedarfsfall zuverlässig öffnen kann, ist es bekannt die Airbag-Abdeckung mit einer Sollbruchlinie zu versehen, die im Falle des Öffnens des Airbags aufbricht, so dass der Airbag durch eine dabei freigegebene Öffnung hindurchtreten kann. Der Aufreißwiderstand darf nicht zu groß sein, so dass die Sollbruchlinie beim Entfalten des Airbags sicher und gänzlich aufreißt. Gleichzeitig darf er auch nicht zu klein sein, um auszuschließen, dass die Sollbruchlinie bereits durch ungewollte mechanische Einwirkungen von Fahrzeuginsassen aufbricht. Ein vorgegebener Aufreißwiderstand muss diesen beiden Bedingungen gerecht werden. Dabei muss es sich nicht um einen exakten Wert handeln, sondern kann sich um einen Wertebereich handeln. Unter einem vorgegebenen konstanten Aufreißwiderstand im Sinne der nachfolgenden Beschreibung handelt es sich um einen Wertebereich innerhalb einer Toleranzgrenze. Ein über die Länge vorgegebener sich veränderter Aufreißwiderstand liegt entsprechend lokal auch innerhalb eines unterschiedlichen Wertebereiches. Der Aufreißwiderstand kann sowohl über die Länge der Sollbruchlinie konstant sein, aber auch einer definierten Änderung unterliegen, indem er z.B. örtlich dort geringer ist, wo das Aufreißen initiiert werden soll.

Bei der Prüfung einer solchen Sollbruchlinie, auch Schwächelinie oder Aufreißlinie genannt, kommt es darauf an, dass die zur Prüfung vorgenommene Messung ausreichend exakt und reproduzierbar ist.

Zur Prüfung des Aufreißwiderstands der Sollbruchlinie ist es wichtig, sowohl die Restwandstärke (Dicke des verbleibenden Materials unterhalb der entstehenden Sacklöcher bzw. Nuten), als auch die Dichte des Materials zu ermitteln bzw. zu kennen.

Bei einer Airbag-Abdeckung aus einem homogenen Material mit einer homogenen Materialdichte und einer konstanten Dicke der Airbag-Abdeckung ist es ausreichend die Restwandstärke zu ermitteln, um eine Aussage über den Aufreißwiderstand treffen zu können. Eine konstante Restwandstärke ist in diesem Fall gleichbedeutend mit einem konstanten Aufreißwiderstand.

Aus dem Stand der Technik bekannte zerstörungsfreie Prüfverfahren finden ausschließlich während der Bearbeitung der Airbag-Abdeckung statt.

Alle nachfolgenden Veröffentlichungen haben die Prüfung eines Materials bzw. der Sollbruchlinie einer Airbag-Abdeckung während der Bearbeitung zum Ziel.

In der US 5 103 676 A ist ein Verfahren zur kontaktlosen Überwachung von Prozessen mittels Ultraschall offenbart, bei dem die Oberfläche eines Materials mit einem gepulsten Laser beleuchtet wird, wodurch Ultraschall an der Oberfläche des beleuchteten Materials entsteht, welcher durch das Material propagiert und im Material an einer anderen, gegenüberliegenden Oberfläche reflektiert wird und bei seiner Rückkehr an die Oberfläche an der er entstanden ist Verformungen erzeugt, welche durch Änderungen der Frequenz eines Detektionslicht, vorzugsweise einen Lasers, mithilfe eine Interferometers vermessen werden können. Dabei wird die Transitzeit der Ultraschallwellen durch das Material bestimmt. Mit dem hier offenbarten Verfahren ist es möglich die Dichte sowie die elastischen Eigenschaften eines Materials kontaktfrei zu messen ohne das Material irreversibel zu verändern.

Die JP 2005 017 130 A offenbart ein Verfahren zur Messung einer Restwandstärke an einer Airbagabdeckung durch den Einsatz eines Ultraschallkopfes. Entlang der Sollbruchlinie wird Ultraschall eingetragen, welcher durch die Airbagabdeckung propagiert und reflektiert wird. Durch die Detektion des Ultraschalls kann eine Restwandstärke bestimmt werden. Das Verfahren soll geeignet sein, Sollbruchlinien zu vermessen, deren Abstand voneinander zu gering ist, um sie mithilfe eines Lasers zu charakterisieren.

In der EP 1 459 943 B1 sind eine Vorrichtung und ein Verfahren offenbart, bei denen eine als Schneidklinge ausgebildete Ultraschall-Sonotrode entlang einer Linie verfahren wird, wobei eine Sollbruchlinie in das Material einer Airbag-Abdeckung eingeschnitten wird. Während des Schneidens wird der Abstand eines mit der Schneidklinge mitgeführten Abstandssensors zu einer das einzuschneidende Material aufnehmenden Schneidgegenplatte gemessen. Es wird die Restwandstärke als Differenz aus dem Abstand von Abstandssensor und Schneidgegenplatte, sowie dem Abstand von Abstandssensor und Grundfläche, bzw. Bodenfläche, errechnet. Das hier verwendete Messverfahren ist an die Verwendung eines mechanischen Werkzeuges gebunden, dessen Eindringtiefe die Tiefe des Schnittes in das Material bestimmt.

Die DE 10 2013 202 081 B3 offenbart eine Vorrichtung zum Einbringen von Schnitten in eine flächige Materialbahn und ein Verfahren zum Steuern einer Schneidvorrichtung. Die Vorrichtung beinhaltet eine Schneidvorrichtung zum Einbringen von Schnitten in die Materialbahn, eine Auflagefläche für die flächige Auflage der Materialbahn, eine Messeinrichtung zur Ermittlung einer verbleibenden Restwandstärke längs des Schnittverlaufs, sowie eine Steuer- und Regeleinrichtung, die anhand der ermittelten Messwerte in Abhängigkeit von vorgegebenen Sollwerten entsprechende Stellsignale liefert, die an eine Antriebseinheit übermittelt werden, die anhand der Stellsignale eine Verstellung der Relativlage der Schneidvorrichtung zu der Auflagefläche bewirkt. Die Ermittlung der verbleibenden Restwandstärke ist hier möglich, indem die Schneidvorrichtung und die Auflagefläche aus einem elektrisch leitenden Material bestehen, und eine mit der Schneidvorrichtung und der Auflagefläche verbundene Spannungsquelle vorhanden ist. Die Messeinrichtung misst den zwischen der Schneideinrichtung und der Auflagefläche beim Schneiden fließenden elektrischen Strom, der vom spezifischen Widerstand der sich dazwischen befindlichen Materialbahn abhängig ist. Im Unterschied zu den vorgenannten Verfahren ist das Messergebnis dann ein Wert der sich nicht allein in Abhängigkeit von der Restwandstärke ändert, wenn das Material inhomogen ist. Nachteilig ist allerdings, dass dieses Messverfahren nur mit einem mechanischen Werkzeug umsetzbar ist und das zu bearbeitende Material leitfähig sein muss.

Ein Verfahren zur zerstörungsfreien Prüfung von Eigenschaften eines Festkörpers bevor oder nachdem er bearbeitet wurde, ist in der US 8 210 045 B2 beschrieben. Es handelt sich um ein laser-basiertes Verfahren zur Erzeugung von Ultraschall, bei dem ein Festkörper mit einem continuous wave (cw) high-power Laser abgetastet wird, wodurch im Festkörper eine thermoelastische Expansion mit einer spezifischen Anklingzeit und Abklingzeit stattfindet und longitudinale, transversale oder Oberflächenwellen entstehen und sich ausbreiten. Durch das Messen dieser verschiedenen Wellenkomponenten ist eine nichtdestruktive Analyse der Eigenschaften wie Wandstärke, Porosität, oder die Anwesenheit von Defekten im Festkörper möglich. Lokale Änderungen der physikalischen Eigenschaften des Festkörpers sorgen für Änderungen in der Amplitude des detektierten Signals. Im Gegensatz zur Verwendung von gepulsten Lasern ist bei diesem Verfahren die Scanrate nicht durch die Wiederholungsrate der Laserpulse limitiert. Für eine Verwendung dieses Verfahrens zur Prüfung einer Sollbruchlinie in einer Airbag-Abdeckung ist es insbesondere nachteilig, dass die Messung der Wandstärke mit einer Auflösung von ca. 0,1 cm zu ungenau ist.

Es ist dem Fachmann bekannt, dass mit der Schallemissionsmessung Werkstoffe wie Metalle, Keramiken, Gläser, Gesteine, Beton, spröde Polymerwerkstoffe, Holz und Verbundwerkstoffe getestet werden können, wobei Schäden an Bauteilen wie Rissbildung, Rissfortschritt, Delamination, Versetzungsbewegung, Phasenumwandlung und Korrosionsprozesse detektiert werden können. Die jeweiligen Schäden führen zu einer markanten Änderung der von dem Bauteil emittierenden Schallwelle.

Die US 2002/0152813 A1 offenbart ein Verfahren zur Messung eines physikalischen Parameters, bei dem ein Messsignal generiert wird, dessen Frequenzinformation extrahiert und anschließend in den physikalischen Parameter umgewandelt wird. Der physikalische Parameter kann die Dicke einer dünnen Schicht sein und das Messsignal kann ein Laser sein. Das Verfahren ist auf die Charakterisierung dünner Schichten beschränkt.

In der US 8 301 029 B2 ist ein akustooptischer Umwandler offenbart, welcher einen Laser, einen optischen Detektor, sowie einen Strahlteiler enthält. Der Strahlteiler teilt den vom Laser emittierten Strahl in einen ersten und einen zweiten Strahl. Der erste Strahl durchläuft eine Weglänge, welche einem akustischen Feld ausgesetzt ist. Der zweite Strahl durchläuft eine akustisch isolierte Weglänge. Die Propagationsgeschwindigkeit des ersten Strahls verändert sich durch die vom akustischen Feld induzierten Dichteänderungen. Dadurch ändert sich die Phasenbeziehung der beiden Teilstrahlen zueinander und der optische Detektor erzeugt ein elektrisches Signal direkt proportional zu der Verschiebung der Phase des ersten Strahls.

In einer vorteilhaften Ausführung werden der erste und der zweite Strahl jeweils mehrere Male von zwei planparallelen Spiegeln reflektiert, wobei der der Zwischenraum eines Spiegelpaares einem akustischen Feld ausgesetzt wird, während der Zwischenraum eines anderen Spiegelpaares akustisch isoliert wird.

Aus der US 2015/0139451 A1 ist eine Vorrichtung bekannt, welche ein Mess- und wenigstens ein Referenzinterferometer beinhaltet. Durch den Einsatz von mehreren Referenzinterferometern kann das Signal-Rausch-Verhältnis verbessert werden. Licht aus derselben Quelle wird in die Interferometer eingekoppelt. Das Messinterferometer wird durch Änderungen eines physikalischen Parameters beeinflusst, das wenigstens eine Referenzinterferometer wird von diesen Einflüssen isoliert. Durch die Änderungen des einen oder auch mehrerer physikalischer Parameter ändert sich die Intensität des aus dem Messinterferometer ausgekoppelten Lichts. Die Änderungen werden durch einen Photodetektor gemessen, womit die Änderungen des bzw. der physikalischen Parameter über die Erfassung der Änderung der Intensität des vom Interferometer emittierten Lichts erfasst werden. Die Vorrichtung beinhaltet außerdem einen Signalprozessor, welcher ein Differenzsignal aus den jeweils detektierten Signalen des Mess- und des Referenzinterferometers erzeugt.

Die vorgenannte US 2015/0139451 A1 offenbart auch eine Umsetzung der Vorrichtung als ein optisches Mikrofon. Hierfür ist das Messinterferometer akustisch mit der Umgebung gekoppelt und der physikalische Parameter ist der Luftdruck. Durch lokale Änderungen des Luftdrucks-, bzw. der Luftdichte, verursacht durch ein Schallfeld, ergeben sich lokale Änderungen des Brechungsindex im Interferometer. Dadurch wird die Amplitude der aus dem Interferometer ausgekoppelten Laserstrahlung moduliert. Die Intensität des ausgekoppelten Lichts ist abhängig von der einlaufenden Schallwelle.

Mithilfe dieses optischen Mikrofons ist es möglich Schallwellen mit einer großen Bandbreite (bis zu 1 MHz in Luft, bis zu 25 MHz in Flüssigkeiten) zu messen. Es können auch verhältnismäßig hohe Frequenzen (>100 kHz) gemessen werden. Herkömmliche Verfahren sind typischerweise auf bis zu ca. 100 kHz Bandbreite begrenzt. Das Messverfahren ist kontaktlos und die Messvorrichtung membranfrei und sehr kompakt. Somit ist es nicht für Störungen durch mechanische Vibrationen anfällig. Ein weiterer Vorteil gegenüber optischen Messverfahren ist, dass elektromagnetische Strahlung aus der Umgebung das detektierte Signal nicht beeinflusst.

In dem Artikel: "Akustische Überwachung für die Lasermaterialbearbeitung", der Fachzeitschrift "Laser", Ausgabe 2/2019 wird ausgeführt, dass durch die Erfassung der Luftschallemission im Frequenzbereich von 10 Hz bis 1 MHz, die nunmehr mit einem "optischen Mikrofon" möglich ist, neue Wege zur Prüfung und Charakterisierung von maschinellen Prozessen ermöglicht werden. Dabei wird die akustische Emission in Luft gemessen und anhand der Datenkurven eine Aussage über Parameter des Materials getroffen. Die hier angegebenen Anwendungsbeispiele umfassen die Detektion von Unregelmäßigkeiten bzw. Defekten auf Oberflächen, die Überwachung von Oberflächenbedingungen (wie z.B. Zinkbeschichtungen), sowie die Echtzeit-Erkennung von Rissbildung in Laserschweißprozessen, oder das Feststellen einer Spritzerbildung bei Schweißprozessen. Die hier angegebenen Anwendungen dienen der Prozesskontrolle.

Es ist die Aufgabe der Erfindung ein Verfahren zur Prüfung einer Airbag-Abdeckung mit einer Sollbruchlinie zu finden, bei dem der Aufreißwiderstand unabhängig von der Transparenz der Airbag-Abdeckung nach der Fertigstellung der Sollbruchlinie zerstörungsfrei geprüft werden kann.

Diese Aufgabe wird für ein Verfahren zur Prüfung einer Airbag-Abdeckung mit einer Sollbruchlinie gelöst. Ein Initiator wird entlang der Sollbruchlinie relativ zu der Airbag-Abdeckung geführt wird, wobei der Initiator an zu prüfenden Orten entlang der Sollbruchlinie Energie einträgt womit Schallwellen verursacht werden. Es wird ein optisches Prüfsignal als Interferenzsignal mit einer Schallsignatur der Schallwellen generiert, das mit einem Referenzsignal, dem ortsbezogen ein vorgegebener Aufreißwiderstand der Sollbruchlinie zugeordnet ist, verglichen wird.

Vorteilhaft wird das Interferenzsignal aus einem Messlaserstrahl generiert, von dem wenigstens ein Anteil entlang einer Strecke durch ein Medium geführt wird, das durch die von dem Initiator am jeweiligen zu prüfenden Ort verursachte Schallwellen beeinflusst wird, sodass eine zur Erzeugung des Interferenzsignals erforderliche Phasenverschiebung induziert wird.

Es ist von Vorteil, wenn die Strecke in einer festen Relativlage zum jeweiligen zu prüfenden Ort angeordnet ist.

Vorteilhaft ist der Initiator ein mechanischer Initiator.

Messtechnisch günstiger ist die Strecke entlang einer dem Initiator abgewandten Seite der Airbag-Abdeckung angeordnet.

Alternativ ist der Initiator vorteilhaft ein Laserstrahl ist, mit zu dem Messlaserstrahl unterschiedlichen Laserparametern, wobei der Messlaserstrahl vorteilhaft ein aus dem Laserstrahl ausgekoppelter Strahlanteil ist.

Aus zu den prüfenden Orten zugeordneten Momentanwerten des Prüfsignals, die gespeichert werden kann ein Qualitätspass für die geprüfte Airbag-Abdeckung erstellt werden.

Das erfindungsgemäße Verfahren wird nachfolgend an verschiedenen Ausführungsbeispielen anhand von Zeichnungen näher erläutert.

Hierzu zeigen:
- Fig. 1: einen Vorrichtungsaufbau für ein erstes Ausführungsbeispiel des Verfahrens mit einem Laserstrahl als Initiator zur Erzeugung des Schalls am Ort der Prüfung,
- Fig. 2: einen Vorrichtungsaufbau für ein zweites Ausführungsbeispiel des Verfahrens mit einem Laserstrahl als Initiator zur Erzeugung des Schalls am Ort der Prüfung,
- Fig. 3: einen Vorrichtungsaufbau für ein drittes Ausführungsbeispiel des Verfahrens mit einem Laserstrahl als Initiator zur Erzeugung des Schalls am Ort der Prüfung und einem daraus ausgekoppelten Messlaserstrahl und
- Fig. 4: einen Vorrichtungsaufbau für ein viertes Ausführungsbeispiel des Verfahrens mit einem Fräser als Initiator zur Erzeugung des Schalls am Ort der Prüfung.

Bei allen Ausführungen des Verfahrens wird ein Initiator entlang einer Sollbruchlinie 3 relativ zu einer Airbag-Abdeckung 2 geführt. Es kann sich bei dem Initiator sowohl um einen optischen Initiator, z.B. einem Laserstrahl LS, als auch um einen mechanischen Initiator, z.B. einem stumpfen Messer 9 handeln. Bei einem optischen Initiator erfolgt ein zur Erzeugung des Schalls notwendiger Energieeintrag durch Absorption von Photonen im Material. Bei einem mechanischen Initiator 9 erfolgt ein Energieeintrag durch mechanische Reibung. In beiden Fällen sind die Eigenschaften des erzeugten Schalls abhängig von den Eigenschaften der sich unterhalb des Initiators befindenden Restwand, wie der Dichte oder der Restwandstärke (Dicke). Diese Eigenschaften bestimmen den Aufreißwiderstand der einer Airbag-Abdeckung 2 entlang der Sollbruchlinie 3. Der Aufreißwiderstand ist eine Größe, die sowohl von der verbleibenden Restwandstärke, als auch von der Dichte und der chemischen Zusammensetzung des zu bearbeitenden Materials abhängt und örtlich entlang der Sollbruchlinie 3 einer Airbag-Abdeckung 2 variieren kann. Für eine Airbag-Abdeckung 2 aus einem Material mit einer homogenen Dichteverteilung ist ein konstanter Aufreißwiderstand gegeben, wenn die Restwandstärke konstant ist. Schwankt die Dichteverteilung des Materials entlang der Linie L, dann ist die Restwandstärke in der Regel abhängig von der Dichteverteilung, um einen definierten Aufreißwiderstand entlang der Sollbruchlinie 3 zu gewährleisten. Zur Qualitätssicherung ist es notwendig den Aufreißwiderstand bei einer Airbag Abdeckung entlang der Sollbruchlinie reproduzierbar quantifizieren zu können.

Zur Prüfung der Sollbruchlinie 3 wird ein optisches Prüfsignal generiert und zur Auswertung mit einem Referenzsignal verglichen. Das Prüfsignal lässt sich als Folge von Momentanwerten verstehen, die jeweils einem zu prüfenden Ort auf einer Oberfläche zugeordnet werden. Ein Momentanwert im Sinne dieser Beschreibung stellt entsprechend einen Ausschnitt aus dem Prüfsignal dar, der über die Zeit, die der Verweildauer des Initiators an einem der zu prüfenden Orte zugeordnet wird, diesem zu prüfenden Ort zugeordnet wird. Bei einem Schlitz oder mehreren Schlitzen mit Unterbrechungen können die zu prüfenden Orte direkt aneinander angrenzen. Bei Sacklöchern beispielsweise sind sie durch bevorzugt regelmäßige Abstände voneinander getrennt.

Erfindungswesentlich ist, dass es sich bei dem optischen Prüfsignal um ein Interferenzsignal handelt, das durch ein akustisches Signal (Schallwellen bzw. ein Schallfeld), welches am zu prüfenden Ort durch die Einwirkung des Initiators auf die Airbag-Abdeckung 2 generiert wird, beeinflusst wird, weshalb von einem Interferenzsignal mit einer Schallsignatur gesprochen wird.

Um das Interferenzsignal zu bilden werden aus einem Messlaserstrahl ML miteinander interferierende Teilstrahlen gebildet, die entweder über unterschiedlich lange Strecken von den Schallwellen beeinflusst werden, oder es wird nur ein Anteil des Messlaserstrahls ML, das heißt einer der beiden Teilstrahlen T1 und T2, vom Schallfeld beeinflusst und der andere Teilstrahl akustisch isoliert geführt. Entscheidend ist, dass die Strecke S, über die wenigstens einer der Teilstrahlen von dem Schallfeld beeinflusst wird, jeweils zu den zu prüfenden Orten eine gleiche Relativlage und auch eine gleiche Länge hat, damit die Beeinflussung unabhängig vom jeweiligen zu prüfenden Ort unter denselben Bedingungen stattfindet. Ein für die Messung dieses Messsignals zuständiger Teil eines zur Durchführung des Verfahrens verwendeten Vorrichtungsaufbaus, insbesondere gegeben durch eine Messlaserstrahlquelle 4 und einen optischen Detektor 5 muss je nachdem, ob der Initiator oder die Airbag-Abdeckung 2 die zur Prüfung erforderliche Bewegung ausführt, synchron mitbewegt werden. Dabei kann die Strecke der Beeinflussung sowohl auf der dem Werkzeug zugewandten Seite oder bevorzugt auf der dem Laserstrahl LS bzw. dem mechanischen Initiator 9 abgewandten Seite der Airbag-Abdeckung 2 angeordnet sein.

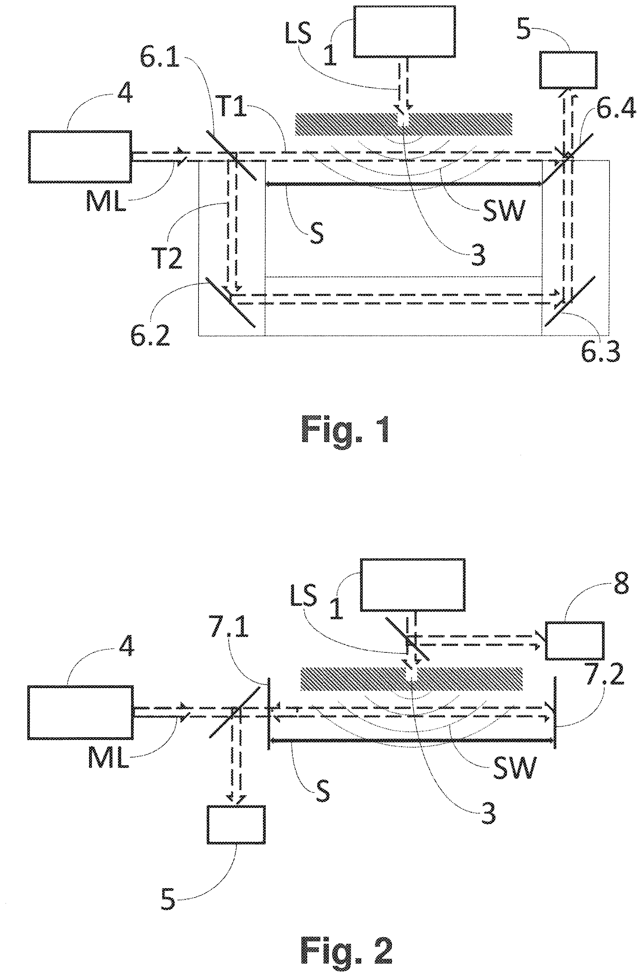

Ein erstes Ausführungsbeispiel für ein erfindungsgemäßes Verfahren wird nachfolgend anhand von **Fig. 1** beschrieben, in der ein hierfür geeigneter Vorrichtungsaufbau als Prinzipskizze dargestellt ist. Gezeigt ist eine Laserstrahlquelle 1 die als Initiator einen Laserstrahl LS entlang einer Sollbruchlinie 3, hier senkrecht zur Zeichenebene, relativ zu einer Airbag-Abdeckung 2 führt. Beim Auftreffen des Laserstrahls LS werden am jeweiligen zu prüfenden Ort Schallwellen SW generiert, deren Eigenschaften charakteristisch sind für die Parameter der unterhalb der Sollbruchlinie 3 noch vorhandenen Restwand und die sich, ein Schallfeld bildend, ausbreiten. Das Schallfeld bildet sich von seiner Quelle, dem Auftreffpunkt des Initiators auf der Airbag-Abdeckung in alle Richtungen aus. Angedeutet ist die Ausbreitung der Schallwellen in den Figuren jeweils in einem für seine Wirkung relevanten Bereich. Der Energieeintrag durch den Laserstrahl LS ist so gering, dass es zu keinem Materialabtrag der Airbag-Abdeckung am jeweiligen Auftreffort kommt.

Um ein von den generierten Schallwellen beeinflusstes optisches Signal zu erhalten weist der für die Messung des Prüfsignals relevante Teil des Vorrichtungsaufbaus eine Messlaserstrahlquelle 4, einen optischen Detektor 5 und vier Spiegel 6.1-6.4 auf. Ein von der Messlaserstrahlquelle 4 emittierter Messlaserstrahl ML wird über einen teildurchlässigen ersten Spiegel 6.1 in einen ersten Teilstrahl T1 und einen zweiten Teilstrahl T2 aufgeteilt. Der erste Teilstrahl T1 wird während seiner Propagation über eine Strecke S, das heißt einen Weg mit einer definierten Länge zurücklegend, den am jeweils zu prüfenden Ort generierten Schallwellen SW ausgesetzt, die zu Druckänderungen in dem Medium entlang der Strecke, durch die der erste Teilstrahl T1 in einer festen Lage gegenüber dem zu prüfenden propagiert, führen. Diese Druckänderungen führen zur Änderung des Brechungsindexes und somit zu einer Änderung der Ausbreitungsgeschwindigkeit des ersten Teilstrahls T1. Die Phase des ersten Teilstrahls T1 wird somit verschoben. Der zweite Teilstrahl T2 wird durch ein Vakuum geführt, völlig unbeeinflusst von den Schallwellen SW, bevor er nach Umlenkung über zwei der Spiegel 6.2, 6.3 über einen teildurchlässigen Spiegel 6.4 mit dem ersten Teilstrahl T1 zur Interferenz gebracht wird. Das dabei entstehende Interferenzsignal wird vom optischen Detektor 5 detektiert. Davon ausgehend, dass die Temperatur und die Wellenlänge des Messlaserstrahls konstant sind, verschiebt sich die Phase des ersten Teilstrahles T1 abhängig von den Druckänderungen durch die Schallwellen und das detektierte Interferenzsignal lässt auf die Druckänderungen und damit die Charakteristik der Schallwellen schließen. Durch die auf der Strecke S einlaufende Schallwellen wird der Brechungsindex des dort befindlichen Mediums moduliert. Die Bildung des Detektionssignals durch Interferenz eines durch die Schallwellen beeinflussten ersten Teilstrahls T1 mit einem unbeeinflussten zweiten Teilstrahl T2 hat den Vorteil, dass Schwankungen der Parameter des Messlaserstrahles ML keinen Einfluss auf das Messergebnis haben. Wichtig für eine objektive und reproduzierbare Messung ist, dass der von dem ersten Teilstrahl T1 durchlaufene geometrische Weg über die Dauer der Verfahrensdurchführung eine stets gleiche Länge und gleiche Relativlage zum jeweiligen zu prüfenden hat.

Ein zweites Ausführungsbeispiel für ein erfindungsgemäßes Verfahren wird anhand des in **Fig. 2** schematisch dargestellten Vorrichtungsaufbaus erläutert.

Bei diesem Ausführungsbeispiel wird im Unterschied zu dem zuvor beschriebenen Ausführungsbeispiel ein Interferenzsignal erzeugt in dem ein Messlaserstrahl ML in einen Resonator eingekoppelt wird. Das Medium zwischen den Resonatorspiegeln 7.1, 7.2 ist den durch den Energieeintrag erzeugten Schallwellen ausgesetzt, wodurch es zu einer Phasenverschiebung bei den im Resonator umlaufenden Wellen kommt. Diese Phasenverschiebung sorgt dafür, dass das aus dem Resonator 7 ausgekoppelte Signal aufgrund der Interferenz des Messlaserstrahls ML im Resonator mit sich selbst in Abhängigkeit von den durch die Schallwellen SW erzeugten Druckdifferenzen moduliert wird.

Vorteilhaft wird hier, um die Schwankungen der Laserparameter aus dem Messergebnis zu eliminieren, ein kleiner Teil des Laserstrahls LS ausgekoppelt und durch einen Überwachungsdetektor 8 detektiert, der dazu dient die Laserparameter während des Prüfprozesses zu überwachen.

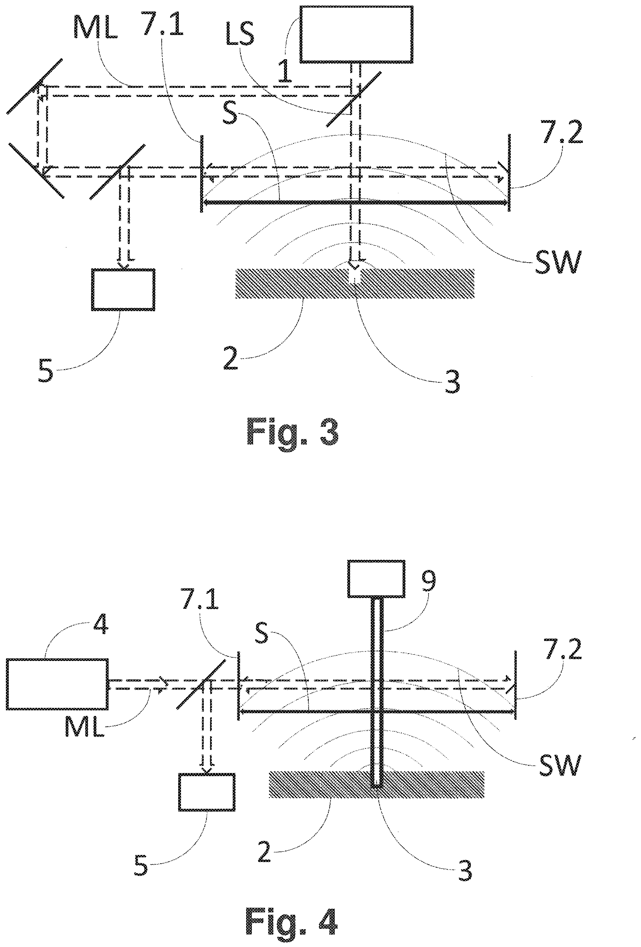

Ein drittes Ausführungsbeispiel für ein erfindungsgemäßes Verfahren unterscheidet sich dadurch, dass der Messlaserstrahl ML ein aus dem Laserstrahl LS ausgekoppelter Strahlanteil ist. Hierfür wird auf einen Vorrichtungsaufbau, dargestellt in **Fig. 3**, zurückgegriffen, der in seinem für die Messung relevanten Teil gemäß dem zweiten Ausführungsbeispiel aufgebaut ist.

Gemäß einem vierten Ausführungsbeispiel, bei dem ebenfalls der Messlaserstrahl aus dem Laserstrahl ausgekoppelt wird, wird die für die Interferenz erforderliche Phasenverschiebung gemäß dem zweiten Ausführungsbeispiel realisiert.

Weitere Ausführungsbeispiele unterscheiden sich zu den vorgenannten durch einen anderen Initiator. Anstelle eines Laserstrahls wird, wie in **Fig. 4** dargestellt, ein mechanischer Initiator 9, z.B. in Form eines stumpfen Messers, eines Schälmesser oder eines Fräser verwendet. Das Prüfsignal wird analog zu den zuvor beschriebenen Ausführungsbeispielen gewonnen.

Die Strecke S ist gemäß den **Fig. 1 und 2** auf der dem Laserstrahl LS bzw. dem mechanischen Initiator 9 abgewandten Seite und gemäß den **Fig. 3 und 4** auf der dem Laserstrahl LS bzw. dem mechanischen Initiator 9 zugewandten Seite angeordnet. Die Anordnung der Strecke S ist für die Ausführungsbeispiele und damit für die Figuren austauschbar.

Bei der Anordnung der Strecke S auf der dem mechanischen Initiator 9 abgewandten Seite der Airbag-Abdeckung ist es vorteilhaft, dass eine Beeinflussung der Schallwellen durch das Werkzeug ausgeschlossen wird und die generierten Schallwellen nur die Restwand durchlaufen, das heißt, dass das an die Restwand angrenzende, die Sollbuchlinie 3 begrenzende Material auf die Schallwellen zumindest einen geringeren Einfluss auf deren Ausbreitung und damit deren Parameter haben. Die Parameter der Schallwellen sind deutlicher von den Parametern der Restwand geprägt als die Schallwellen auf der dem Werkzeug zugewandten Seite. Die Anordnung der Strecke S auf der dem Initiator abgewandten Seite ist besonders vorteilhaft, wenn die Airbag-Abdeckung 2 aus einem Schichtmaterial besteht und die Restwand nur von einem Teil einer Schicht gebildet wird.

In allen Ausführungsbeispielen wird zur Prüfung des Aufreißwiderstands an den jeweiligen zu prüfenden Orten das detektierte Interferenzsignal mit einem Referenzsignal verglichen, das charakteristisch für den definierten Aufreißwiderstand der Airbag-Abdeckung 2 entlang der Sollbruchlinie 3 ist.

Das Referenzsignal wurde zuvor gewonnen indem eine oder mehrere Airbag-Abdeckungen, die nachweislich den erwarteten Aufreißwiderstand entlang ihrer Sollbruchlinie aufweisen, mit der oben genannten Methode geprüft wurden. Die Momentanwerte des Prüfsignals, die an den einzelnen zu prüfenden Orten detektiert wurden werden dann der Zeit zugeordnet als Referenzsignal gespeichert.

### Bezugszeichenliste

- 1: Laserstrahlquelle
- 2: Airbag-Abdeckung
- 3: Sollbruchlinie
- 4: Messlaserstrahlquelle
- 5: optischer Detektor
- 6.1-6.4: Spiegel
- 7: Resonator
- 7.1, 7.2: Resonatorspiegel
- 8: Überwachungsdetektor
- 9: mechanischer Initiator

- SW: Schallwellen
- S: Strecke
- ML: Messlaserstrahl
- T1: erster Teilstrahl
- T2: zweiter Teilstrahl
- LS: Laserstrahl

## Patentansprüche

1. Verfahren zur Prüfung einer Airbag-Abdeckung (2) mit einer Sollbruchlinie (3), wobei ein Initiator entlang der Sollbruchlinie (3) relativ zu der Airbag-Abdeckung (2) geführt wird, während der Initiator an zu prüfenden Orten entlang der Sollbruchlinie (3) Energie einträgt, wodurch Schallwellen (SW) verursacht werden, **dadurch gekennzeichnet dass** ein optisches Prüfsignal als Interferenzsignal mit einer Schallsignatur der Schallwellen (SW) generiert wird, das mit einem Referenzsignal, dem ortsbezogen ein vorgegebener Aufreißwiderstand der Sollbruchlinie (3) zugeordnet ist, verglichen wird.

2. Verfahren nach Anspruch 1, **dadurch gekennzeichnet,**
**dass** das Interferenzsignal aus einem Messlaserstrahl (ML) generiert wird, von dem wenigstens ein Anteil entlang einer Strecke (S) durch ein Medium geführt wird, das durch die von dem Initiator am jeweiligen zu prüfenden Ort verursachte Schallwellen (SW) beeinflusst wird, sodass eine zur Erzeugung des Interferenzsignals erforderliche Phasenverschiebung induziert wird.

3. Verfahren nach Anspruch 2, **dadurch gekennzeichnet,**
**dass** die Strecke (S) in einer festen Relativlage zum jeweiligen zu prüfenden Ort angeordnet ist.

4. Verfahren nach Anspruch 1 oder 2, **dadurch gekennzeichnet,**
**dass** der Initiator ein mechanischer Initiator (9) ist.

5. Verfahren nach Anspruch 4, **dadurch gekennzeichnet,**
**dass** die Strecke (S) entlang einer dem Initiator abgewandten Seite der Airbag-Abdeckung (2) angeordnet ist.

6. Verfahren nach Anspruch 2, **dadurch gekennzeichnet,**
**dass** der Initiator ein Laserstrahl (LS) ist, mit zu dem Messlaserstrahl (ML) unterschiedlichen Laserparametern.

7. Verfahren nach Anspruch 2, **dadurch gekennzeichnet,**
**dass** der Initiator ein Laserstrahl (LS) ist und der Messlaserstrahl (MS) ein aus dem Laserstrahl (LS) ausgekoppelter Strahlanteil ist.

8. Verfahren nach einem der vorhergehenden Ansprüche, **dadurch gekennzeichnet, dass** den zu prüfenden Orten zugeordnete Momentanwerte des Prüfsignals gespeichert werden und aus den gespeicherten Momentanwerten ein Qualitätspass für die geprüfte Airbag-Abdeckung (2) erstellt wird.

## Claims

1. A method for testing an airbag cover (2) comprising a predetermined breaking line (3), wherein
an initiator is guided along the predetermined breaking line (3) relative to the airbag cover (2), while the initiator introduces energy at locations to be tested along the predetermined breaking line (3), thereby causing sound waves (SW), **characterized in that**
an optical test signal is generated as an interference signal with a sound signature of the sound waves (SW), which is compared with a reference signal to which a predetermined tear resistance of the predetermined breaking line (3) is assigned in relation to the location.

2. The method according to claim 1, **characterized in that**
the interference signal is generated from a measuring laser beam (ML), at least a portion of which is guided along a path (S) through a medium which is influenced by the sound waves (SW) caused by the initiator at the respective location to be tested, so that a phase shift required to generate the interference signal is induced.

3. The method according to claim 2, **characterized in that**
the path (S) is arranged in a fixed position relative to the respective location to be tested.

4. The method according to claim 1 or 2, **characterized in that**
the initiator is a mechanical initiator (9).

5. The method according to claim 4, **characterized in that**
the path (S) is arranged along a side of the airbag cover (2) facing away from the initiator.

6. The method according to claim 2, **characterized in that**
the initiator is a laser beam (LS) with laser parameters differing from those of the measuring laser beam (ML).

7. The method according to claim 2, **characterized in that**
the initiator is a laser beam (LS) and the measuring laser beam (MS) is a beam portion decoupled from the laser beam (LS).

8. The method according to any one of the preceding claims, **characterized in that** instantaneous values of the test signal assigned to the locations to be tested are stored and a quality pass for the tested airbag cover (2) is created from the stored instantaneous values.

## Revendications

1. Procédé de test d'une couverture de coussin gonflable de sécurité (2) comportant une ligne de rupture prédéterminée (3), dans lequel un initiateur est guidé le long de la ligne de rupture prédéterminée (3) par rapport à la couverture de coussin gonflable de sécurité (2), tandis que l'initiateur applique de l'énergie à des endroits à tester le long de la ligne de rupture prédéterminée (3), ce qui provoque des ondes sonores (SW), **caractérisé**
**en ce qu'**un signal de test optique est généré en tant que signal d'interférence avec une signature sonore des ondes sonores (SW),
qui est comparé à un signal de référence auquel est associée, en fonction de l'endroit, une résistance à la rupture prédéfinie de la ligne de rupture prédéterminée (3).

2. Procédé selon la revendication 1, **caractérisé**
**en ce que** le signal d'interférence est généré à partir d'un faisceau laser de mesure (ML), dont au moins une partie est guidée le long d'un trajet (S) à travers un milieu qui est influencé par les ondes sonores (SW) provoquées par l'initiateur à l'endroit respectif à tester, de sorte qu'un déphasage nécessaire à la génération du signal d'interférence est induit.

3. Procédé selon la revendication 2, **caractérisé**
**en ce que** le trajet (S) est disposé dans une position relative fixe par rapport à l'endroit respectif à tester.

4. Procédé selon la revendication 1 ou 2, **caractérisé**
**en ce que** l'initiateur est un initiateur mécanique (9).

5. Procédé selon la revendication 4, **caractérisé**
**en ce que** le trajet (S) est disposé le long d'un côté de la couverture de coussin gonflable de sécurité (2) opposé à l'initiateur.

6. Procédé selon la revendication 2, **caractérisé**
**en ce que** l'initiateur est un faisceau laser (LS), avec des paramètres laser différents de ceux du faisceau laser de mesure (ML).

7. Procédé selon la revendication 2, **caractérisé**
**en ce que** l'initiateur est un faisceau laser (LS) et le faisceau laser de mesure (MS) est une partie de faisceau découplée du faisceau laser (LS).

8. Procédé selon l'une quelconque des revendications précédentes, **caractérisé en ce que** des valeurs instantanées du signal de test associées aux endroits à tester sont mémorisées et **en ce qu'**un passeport qualité pour la couverture de coussin gonflable de sécurité (2) testée est établi à partir des valeurs instantanées mémorisées.
